# EUROPEAN PATENT SPECIFICATION

(11) **EP 0 723 976 B1**
(45) Date of publication and mention of the grant of the patent: **31.03.2004**
(21) Application number: 96300508.7
(22) Date of filing: 25.01.1996
(51) Int. Cl.: C08F 4/649, C08F 10/00

(54) **Dry prepolymerized catalyst for olefin polymerization, process for preparing the same and gas phase olefin polymerization process**
Trockener prepolymerisierter Katalysator für die Olefinpolymerisation, Verfahren zu seiner Herstellung und Gasphasenverfahren zur Olefinpolymerisation
Catalyseur prépolymérisé sec pour la polymérisation d'oléfines, son procédé de préparation et procédé de polymérisation d'oléfines en phase gazeuse

(30) Priority: 25.01.1995 JP 1017095; 12.12.1995 JP 32287195
(43) Date of publication of application: 31.07.1996
(73) Proprietor: MITSUI CHEMICALS, INC., Tokyo (JP)
(72) Inventor: Tsutsui, Toshiyuki, c/o Mitsui Petrochem Ind, Ltd, Waki-cho, Kuga-gun, Yamaguchi 740 (JP); Yoshitsugu, Ken, c/o Mitsui Petrochem Ind, Ltd, Waki-cho, Kuga-gun, Yamaguchi 740 (JP); Yamamoto, Kunio, c/o Mitsui Petrochem Ind, Ltd, Waki-cho, Kuga-gun, Yamaguchi 740 (JP); Doi, Kenji, c/o Mitsui Petrochem Ind, Ltd, Waki-cho, Kuga-gun, Yamaguchi 740 (JP); Suzuki, Naohisa, c/o Mitsui Petrochem Ind, Ltd, Waki-cho, Kuga-gun, Yamaguchi 740 (JP)
(74) Representative: Cresswell, Thomas Anthony

(56) References cited:
- EP-A- 0 409 492
- EP-A- 0 619 326

## Description

### FIELD OF THE INVENTION

The present invention relates to a dry prepolymerized catalyst for olefin polymerization, which has excellent polymerization activity and fluidity, to a process for preparing the dry prepolymerized catalyst and to a gas phase olefin polymerization process using the dry prepolymerized catalyst.

### BACKGROUND OF THE INVENTION

Olefin polymers, such as polyethylene and linear low-density polyethylene (LLDPE) that is a copolymer of ethylene and α-olefin, have been widely used as film-forming materials. The olefin polymers are conventionally prepared by (co)polymerizing an olefin in the presence of a titanium solid catalyst component containing magnesium, titanium and a halogen component as its essential ingredients. Although originally used for ethylene polymerization recent advances have been made with regards to the copolymerization of olefins using these catalysts, particularly the copolymerization of propylene with other α-olefins. EP-A-0 409 492 proposes a catalyst system which is highly active with respect to propylene polymerization and thus polymerizes propylene and ethylene at approximately the same rate. This effect is achieved by forming the catalyst using a combination of selected electron donors and preparing the catalyst component according to a specific production process. This catalyst system allows the production of elastomeric copolymers of propylene with ethylene and/or 1-butene.

Recently, a metallocene catalyst comprising a solid catalyst component containing a metallocene compound of a Group VIB metal of the periodic table such as zirconium and an organoaluminum component has been developed as a catalyst capable of (co)polymerizing an olefin with high polymerization activity. Catalysts of this type having an organoaluminum oxy-compound as the organoaluminum component were proposed by Kaminsky *et al* and were shown to have a particularly high polymerization activity. EP-A-0 619 326 identified that these type of catalysts were relatively expensive to use due to the presence of the expensive organoaluminum oxy-compound and proposed a prepolymerized catalyst which was formed using less organoaluminum oxy-compound but which retained high activity. Catalysts of EP-A-0 619 326 were prepared by prepolymerizing an olefin on a catalyst component constituted of a carrier, an organoaluminum oxy-compound and a metallocene compound said prepolymerization being carried out in the presence of an organoaluminum compound (other than an aluminium oxy-compound) and an ionising ionic compound.

The olefin (co)polymerization using such catalysts is carried out by a solution polymerization process, a suspension polymerization process or a gas phase polymerization process. In the gas phase polymerization process, polymers can be obtained in the form of particles, and thus steps following the polymerization, such as polymer precipitation and separation steps, which are necessary in the liquid phase polymerization process, can be omitted. Hence, the production process can be more simplified than in the liquid phase polymerization process, and thereby the production cost can be reduced.

The gas phase polymerization process is a continuous process in which a solid catalyst and an olefin are continuously fed to a polymerization reactor (fluidized bed reactor) to polymerize or copolymerize the olefin in the fluidized bed, while the resulting polymer particles are continuously drawn out of the reactor. However, there is a problem in the gas phase olefin polymerization process that polymer particles may agglomerate in the fluidized bed and adhere to the inside wall of the polymerization reactor or to the gas dispersion plate, and the resulting polymer agglomerates and sheet-like polymers cause decrease in fluidity of the fluidized bed, which may compel the operation to be terminated.

Under such circumstances, it has been desired to develop a polymerization process capable of stably polymerizing an olefin in a gas phase for a long period of time, in particular using a metallocene catalyst of high polymerization activity.

The present inventors have earnestly studied on the problems in the gas phase olefin polymerization process, and have found that when a solid catalyst is fed to the polymerization reactor in the form of a slurry in a hydrocarbon medium, the hydrocarbon introduced into the polymerization system may be liquefied depending on the temperature to cause decrease in the fluidity of the fluidized bed. However, it is difficult to stably feed the solid catalyst in the form other than the slurry to the polymerization reactor because of its low fluidity. Further, if a fluidity improver is added to improve the fluidity of the solid catalyst, the polymerization activity may be reduced. Furthermore, when the solid catalyst is dried to improve the fluidity thereof, the polymerization activity may also be reduced depending on the drying conditions.

As a result of further studies based on the above finding, the present inventors have found that a prepolymerized catalyst having been dried under specific conditions to decrease a volatile matter content to a specific value or lower exhibits excellent polymerization activity and fluidity, to accomplish the present invention.

### OBJECT OF THE INVENTION

It is an object of the present invention to provide a dry prepolymerized catalyst for olefin polymerization which has excellent olefin polymerization activity and fluidity. It is another object of the invention to provide a process for preparing this catalyst. It is a further object of the invention to provide a gas phase olefin polymerization process using the dry prepolymerized catalyst.

### SUMMARY OF THE INVENTION

The dry prepolymerized catalyst for olefin polymerization according to the present invention comprises a solid catalyst component and a prepolymerized polymer of an olefin, said solid catalyst component comprising:
(A) a particle carrier composed of at least one element selected from those of Group II, Group III and Group IV of the periodic table,
(B) a compound of a transition metal of Group IVB of the periodic table, that is supported on the particle carrier (A), and
(C) an organoaluminum oxy-compound, that is supported on the particle carrier (A),
wherein said dry prepolymerized catalyst has a content of volatile matter of not more than 2.0 % by weight.

Because of its good fluidity, the dry prepolymerized catalyst for olefin polymerization according to the invention can be stably fed to the polymerization reactor and has excellent olefin polymerization activity.

The dry prepolymerized catalyst for olefin polymerization according to the invention can be prepared by a process comprising drying a prepolymerized catalyst at a temperature of not higher than 50 °C in a stream of an inert gas having an oxygen concentration of not more than 20 ppm and a water content of not more than 20 ppm, to reduce the content of volatile matter to not more than 2.0 % by weight, wherein said prepolymerized catalyst comprises a solid catalyst component and a prepolymeized polymer of an olefin, said solid catalyst component comprising:
(A) a particle carrier composed of at least one element selected from elements of Group II, Group III and Group IV of the periodic table,
(B) a compound of a transition metal of Group IVB of the periodic table, that is supported on the particle carrier (A), and
(C) an organoaluminum oxy-compound, that is supported on the particle carrier (A).

A preferred inert gas used in the invention can be obtained from a crude inert gas by treating it with a catalyst containing 20 to 40 % by weight of copper under the conditions of a temperature of 0 to 100 °C, a pressure of 1 to 30 kg/cm²-G and GHSV of 100 to 2,000 hr⁻¹ and then with a molecular sieve under the conditions of a temperature of 0 to 100 °C, a pressure of 1 to 30 kg/cm²-G and GHSV of 100 to 2,000 hr⁻¹.

It is also preferred that the inert gas obtained by the above-mentioned treatment has an oxygen concentration of not more than 20 ppm and a water content of not more than 20 ppm.

By drying the prepolymerized catalyst in the manner according to the invention, a dry prepolymerized catalyst having excellent fluidity can be prepared without reducing the olefin polymerization activity.

The gas phase olefin polymerization process according to the invention comprises polymerizing an olefin in a gas phase with feeding a prepolymerized catalyst to a polymerization reactor, wherein said prepolymerized catalyst comprises a solid catalyst component and a prepolymerzed polymer of an olefin, said solid catalyst component comprising:
(A) a particle carrier composed of at least one element selected from elements of Group II, Group III and Group IV of the periodic table,
(B) a compound of a transition metal of Group IVB of the periodic table, that is supported on the particle carrier (A), and
(C) an organoaluminum oxy-compound, that is supported on the particle carrier (A);
in which the prepolymerized catalyst to be fed to the polymerization reactor has a content of volatile matter of not more than 2.0 % by weight and is in the form of a solid powder.

In the olefin polymerization process according to the invention, the olefin can be stably polymerized for a long period of time with high polymerization activity. Further, because the catalyst is fed to the polymerization reactor in the form of a solid powder, not a slurry, polymerization can be carried out at a temperature of not higher than a boiling point of a hydrocarbon used for the slurry of the catalyst, and thus it is possible to employ a widened polymerization temperature range as compared to the conventional processes.

### BRIEF DESCRIPTION OF THE DRAWINGS

Fig. 1 is an explanatory view showing steps for preparing a dry prepolymerized catalyst for olefin polymerization according to the present invention.

Fig. 2 is a schematic view of a gas phase fluidized bed reactor in which an olefin can be polymerized according to the invention.
- 1: solid catalyst
- 3: fluidized bed reactor
- 3a: velocity reduction zone
- 4: gas distribution plate
- 5: fluidized bed
- 7: blower
- 8: heat exchanger
- 9: olefin supply line
- 10: recycling line
- 11: polymer recovery line

### DETAILED DESCRIPTION OF THE INVENTION

The dry prepolymerized catalyst for olefin polymerization, the process for preparing the catalyst and the gas phase olefin polymerization process according to the present invention will be described in detail hereinafter.

The term "polymerization" used herein includes not only "homopolymerization" but also "copolymerization". Similarly, the term "polymer" used herein includes not only "homopolymer" but also "copolymer".

The dry prepolymerized catalyst for olefin polymerization according to the invention comprises a solid catalyst component and a prepolymerized polymer of an olefin, said solid catalyst component comprising:
(A) a particle carrier,
(B) a compound of a transition metal of Group IVB of the periodic table, that is supported on the particle carrier (A), and
(C) an organoaluminum oxy-compound, that is supported on the particle carrier (A),
wherein said dry prepolymerized catalyst has a content of volatile matter of not more than 2.0 % by weight.

First, each component for forming the dry prepolymerized catalyst for olefin polymerization according to the invention is described.

The particle carrier (A) used in the invention is an inorganic compound in the form of particles comprising an oxide of at least one element selected from Group II, Group III and Group IV of the periodic table.

The particle inorganic compound is preferably a porous oxide, and examples thereof include SiO₂, Al₂O₃, MgO, ZrO₂, TiO₂, B₂O₃, CaO, ZnO, BaO, ThO₂, and mixtures of these oxides or mixtures of these and other oxides, such as SiO₂-MgO, SiO₂-Al₂O₃, SiO₂-TiO₂, SiO₂-V₂O₅, SiO₂-Cr₂O₃, SiO₂-TiO₂-MgO. Of these, preferred are compounds containing at least one selected from SiO₂, Al₂O₃ and MgO as the major component. Particularly preferred is SiO₂. These compounds may be used in combination of two or more kinds.

The particle carrier (A) used in the invention desirably has a specific surface area of 50 to 1,000 m⁻²/g, a pore volume of 0.3 to 2.5 cm³/g and a mean particle diameter of 1 to 300 µm.

The compound (B) of a transition metal of Group IVB of the periodic table used in the invention is, for example, a transition metal compound containing a ligand having a cyclopentadienyl skeleton, which may be represented by the following formula (I):

MLₓ (I).

In the formula (I), M is a transition metal atom selected from those of Group IVB of the periodic table, preferably, zirconium, titanium or hafnium.

x is a valence of the transition metal atom M and indicates the number of the ligand(s) L coordinated to the transition metal atom M.

L is a ligand or a group coordinated to the transition metal atom M. At least one ligand L is a ligand having a cyclopentadienyl skeleton, and other L than the ligand having a cyclopentadienyl skeleton is a hydrocarbon group of 1 to 12 carbon atoms, an alkoxy group, an aryloxy group, a trialkylsilyl group, SO₃R (R is a hydrocarbon group of 1 to 8 carbon atoms which may have a substituent such as halogen), a halogen atom and hydrogen.

Examples of the ligands having a cyclopentadienyl skeleton include cyclopentadienyl group; alkyl substituted cyclopentadienyl groups, such as methylcyclopentadienyl, dimethylcyclopentadienyl, trimethylcyclopentadienyl, tetramethylcyclopentadienyl, pentamethylcyclopentadienyl, ethylcyclopentadienyl, methylethylcyclopentadienyl, propylcyclopentadienyl, methylpropylcyclopentadienyl, butylcyclopentadienyl, methylbutylcyclopentadienyl and hexylcyclopentadienyl; indenyl group; alkyl substituted indenyl groups; 4,5,6,7-tetrahydroindenyl groups; and fluorenyl groups. These groups may be substituted with halogen atoms or trialkylsilyl groups.

Of the above ligands having a cyclopentadienyl skeleton, particularly preferred are alkyl substituted cyclopentadienyl groups.

When the compound represented by the formula (I) has two or more ligands having a cyclopentadienyl skeleton, two of these ligands may be bonded to each other through a bridging group, for example, an alkylene group such as ethylene or propylene, a substituted alkylene group such as isopropylidene or diphenylmethylene, a silylene group or a substituted silylene group such as dimethylsilylene, diphenylsilylene or methylphenylsilylene.

Ligands other than those having a cyclopentadienyl skeleton are described below.

Examples of the hydrocarbon groups of 1 to 12 carbon atoms include alkyl groups, cycloalkyl groups, aryl groups and aralkyl groups. More specifically, there can be mentioned:
alkyl groups, such as methyl, ethyl, propyl, isopropyl and butyl;
cycloalkyl groups, such as cyclopentyl and cyclohexyl;
aryl groups, such as phenyl and tolyl; and
aralkyl groups, such as benzyl and neophyl.

Examples of the alkoxy groups include those having 1 to 10 carbon atoms such as methoxy, ethoxy and butoxy.

Examples of the aryloxy groups include those having 6 to 20 carbon atoms such as phenoxy.

Examples of the trialkylsilyl groups include those having 3 to 21 carbon atoms in total such as trimethylsilyl and triethylsilyl.

Examples of the ligands represented by SO₃R include p-toluenesulfonato, methanesulfonato and trifluoromethanesulfonato.

Examples of the halogens include fluorine, chlorine, bromine and iodine.

When the valence of the transition metal atom is 4, the transition metal compound (B) used in the invention may more specifically be represented by the following formula (I') :

R¹R²R³R⁴M (Iʹ)

wherein M is a transition metal atom as described above, R¹ to R⁴ are each a ligand or a group coordinated to the transition metal atom M.

R¹ is a ligand having a cyclopentadienyl skeleton as described above for L in the formula (I).

R², R³ and R⁴ may be the same or different, and are each a ligand having a cyclopentadienyl skeleton, a hydrocarbon group of 1 to 12 carbon atom, an alkoxy group, aryloxy group, a trialkylsilyl group, SO₃R, a halogen atom or a hydrogen atom as described above for L in the formula (I).

In the present invention, preferably used are transition metal compounds of the formula (I') wherein one of R², R³ and R⁴ is a ligand having a cyclopentadienyl skeleton, for example, R¹ and R² are ligands having a cyclopentadienyl skeleton. These ligands having a cyclopentadienyl skeleton may be bonded to each other through a bridging group as described above. In this case, R³ and R⁴ are each an alkyl group, a cycloalkyl group, an aryl group, an aralkyl group, an alkoxy group, an aryloxy group, a trialkylsilyl group, SO₃R, a halogen atom or a hydrogen atom.

Listed below are examples of the transition metal compounds represented by the formula (I) wherein M is zirconium.
Bis(indenyl)zirconium dichloride,
Bis(indenyl)zirconium dibromide,
Bis(indenyl)zirconiumbis(p-toluenesulfonate),
Bis(4,5,6,7-tetrahydroindenyl)zirconium dichloride,
Bis(fluorenyl)zirconium dichloride,
Ethylenebis(indenyl)zirconium dichloride,
Ethylenebis(indenyl)zirconium dibromide,
Ethylenebis(indenyl)dimethyl zirconium,
Ethylenebis(indenyl)diphenyl zirconium,
Ethylenebis(indenyl)methylzirconium monochloride,
Ethylenebis(indenyl)zirconiumbis(methanesulfonate),
Ethylenebis(indenyl)zirconiumbis(p-toluenesulfonate),
Ethylenebis(indenyl)zirconiumbis(trifluoromethanesulfonate),
Ethylenebis(4,5,6,7-tetrahydroindenyl)zirconium dichloride,
Isopropylidene(cyclopentadienyl-fluorenyl)zirconium dichloride,
Isopropylidene(cyclopentadienylmethylcyclopentadienyl)zirconium dichloride,
Dimethylsilylenebis(cyclopentadienyl)zirconium dichloride,
Dimethylsilylenebis(methylcyclopentadienyl)zirconium dichloride,
Dimethylsilylenebis(dimethylcyclopentadienyl)zirconium dichloride,
Dimethylsilylenebis(trimethylcyclopentadienyl)-zirconium dichloride,
Dimethylsilylenebis(indenyl)zirconium dichloride,
Dimethylsilylenebis(indenyl)zirconiumbis(trifluoromethanesulfonate),
Dimethylsilylenebis(4,5,6,7-tetrahydroindenyl) zirconium dichloride,
Dimethylsilylene(cyclopentadienyl) (fluorenyl)zirconium dichloride,
Diphenylsilylenebis(indenyl)zirconium dichloride,
Methylphenylsilylenebis(indenyl)zirconium dichloride,
Bis(cyclopentadienyl)zirconium dichloride,
Bis(cyclopentadienyl)zirconium dibromide,
Bis(cyclopentadienyl)methylzirconium monochloride,
Bis(cyclopentadienyl)ethylzirconium monochloride,
Bis(cyclopentadienyl)cyclohexylzirconium monochloride,
Bis(cyclopentadienyl)phenylzirconium monochloride,
Bis(cyclopentadienyl)benzylzirconium monochloride,
Bis(cyclopentadienyl)zirconium monochloride monohydride,
Bis(cyclopentadienyl)methylzirconium monohydride,
Bis(cyclopentadienyl)dimethyl zirconium,
Bis(cyclopentadienyl)diphenyl zirconium,
Bis(cyclopentadienyl)dibenzyl zirconium,
Bis(cyclopentadienyl)zirconium methoxychloride,
Bis(cyclopentadienyl)zirconium ethoxychloride,
Bis(cyclopentadienyl)zirconiumbis(methanesulfonate),
Bis(cyclopentadienyl)zirconiumbis(p-toluenesulfonate),
Bis(cyclopentadienyl)zirconiumbis(trifluoromethanesulfonate),
Bis(methylcyclopentadienyl)zirconium dichloride,
Bis(dimethylcyclopentadienyl)zirconium dichloride,
Bis(dimethylcyclopentadienyl)zirconium ethoxychloride,
Bis(dimethylcyclopentadienyl)zirconiumbis(trifluoromethanesulfonate),
Bis(ethylcyclopentadienyl)zirconium dichloride,
Bis(methylethylcyclopentadienyl)zirconium dichloride,
Bis(propylcyclopentadienyl)zirconium dichloride,
Bis(methylpropylcyclopentadienyl)zirconium dichloride,
Bis(butylcyclopentadienyl)zirconium dichloride,
Bis(methylbutylcyclopentadienyl)zirconium dichloride,
Bis(methylbutylcyclopentadienyl)zirconiumbis(methanesulfonate),
Bis(trimethylcyclopentadienyl)zirconium dichloride,
Bis(tetramethylcyclopentadienyl)zirconium dichloride,
Bis(pentamethylcyclopentadienyl)zirconium dichloride,
Bis(hexylcyclopentadienyl)zirconium dichloride, and
Bis(trimethylsilylcyclopentadienyl)zirconium dichloride.

In the above examples, the compounds having a disubstituted cyclopentadienyl ring include 1,2- and 1,3-substituted derivatives, and the compounds having a trisubstituted cyclopentadienyl ring include 1,2,3- and 1,2,4-substituted derivatives. The alkyl groups such as propyl and butyl include their isomers such as n-, i-, sec- and tert-groups.

Also employable as the transition metal compounds (B) in the invention are transition metal compounds wherein zirconium is replaced with titanium or hafnium in the above-mentioned zirconium compounds.

These transition metal compounds (B) may be used singly or in combination of two or more kinds. Further, they may be used after diluted with a hydrocarbon or a halogenated hydrocarbon.

The transition metal compound (B) used in the present invention is preferably a zirconocene compound which contains zirconium as its central transition metal atom and has at least two ligands having a cyclopentadienyl skeleton.

The organoaluminum oxy-compound (C) used in the invention is specifically aluminoxane conventionally known or a benzene-insoluble organoaluminum oxy-compound as exemplified in Japanese Patent Laid-Open Publication No. 78687/1990.

The conventionally known aluminoxane can be prepared from the later-described organoaluminum compound (D) by, for example, the following procedures.
(1) An organoaluminum compound such as trialkylaluminum is added to a hydrocarbon medium suspension of compounds containing adsorbed water or salts containing water of crystallization, e.g., magnesium chloride hydrate, copper sulfate hydrate, aluminum sulfate hydrate, nickel sulfate hydrate or cerous chloride hydrate, so as to allow the organoaluminum compound to react with the adsorbed water or the water of crystallization.
(2) Water, ice or water vapor is allowed to directly act on an organoaluminum compound such as trialkylaluminum in a medium such as benzene, toluene, ethyl ether or tetrahydrofuran.
(3) An organotin oxide such as dimethyltin oxide or dibutyltin oxide is allowed to react with an organoaluminum compound such as trialkylaluminum in a medium such as decane, benzene or toluene.

The aluminoxane may contain a small amount of an organometallic component. Further, it is possible that the solvent or the unreacted organoaluminum compound is distilled off from the recovered solution of aluminoxane and the remainder is redissolved in a solvent or suspended in a poor solvent for the aluminoxane.

The dry prepolymerized catalyst for olefin polymerization according to the invention is a solid catalyst obtained by drying a prepolymerized catalyst which can be prepared by prepolymerizing an olefin in the presence of a solid catalyst component comprising the particle carrier (A), the transition metal compound (B) supported on the carrier (A) and the organoaluminum oxy-compound (C) supported on the carrier (A).

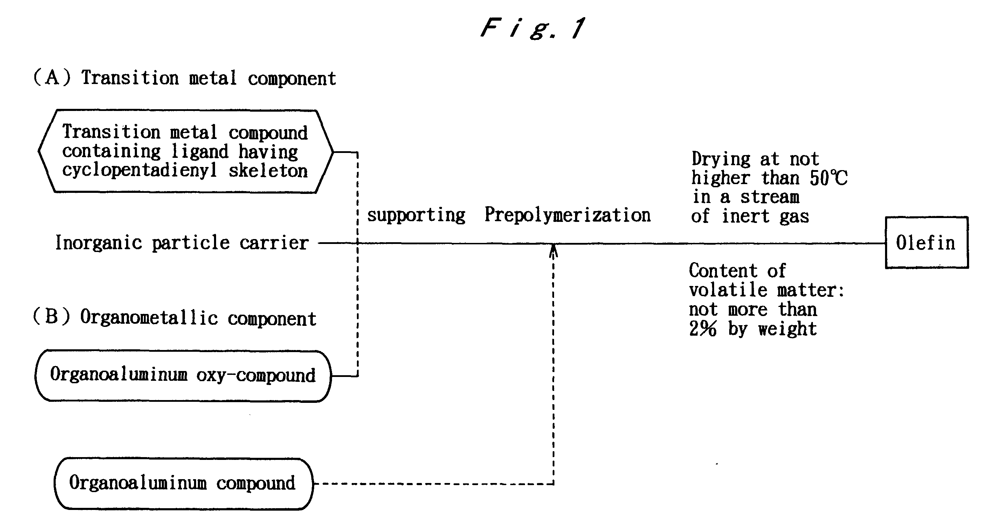

Fig. 1 shows steps for preparing the dry prepolymerized catalyst for olefin polymerization according to the invention.

The solid catalyst component can be prepared by bringing the particle carrier (A) into contact with the transition metal compound (B) and the organoaluminum oxy-compound (C).

The contact of the components can be carried out in an inert hydrocarbon medium. Examples of such hydrocarbon media include aliphatic hydrocarbons, such as propane, butane, pentane, hexane, heptane, octane, decane, dodecane and kerosine; alicyclic hydrocarbons, such as cyclopentane, cyclohexane and methylcyclopentane; aromatic hydrocarbons, such as benzene, toluene and xylene; halogenated hydrocarbons, such as ethylene chloride, chlorobenzene and dichloromethane; and mixtures of these hydrocarbons.

In the preparation of the solid catalyst component, the transition metal compound (B) is used in an amount (in terms of transition metal atom) of usually 0.001 to 1.0 mmol, preferably 0.01 to 0.5 mmol, per 1 g of the particle carrier (A); and the organoaluminum oxy-compound is used in an amount of usually 0.1 to 100 mmol, preferably 0.5 to 20 mmol, per 1 g of the particulate carrier (A).

The solid catalyst component thus prepared may contain, if desired, other ingredients useful for the olefin polymerization, such as an electron donor and a reaction assistant, in addition to the above-mentioned catalyst components (A), (B) and (C).

In the presence of the solid catalyst component as described above, an olefin is prepolymerized to prepare a prepolymerized catalyst comprising the solid catalyst component and the resulting prepolymerized olefin polymer. The prepolymerization can be carried out by any conventionally known method using inert hydrocarbon media such as those mentioned above.

In the prepolymerization, an organoaluminum compound (D) described below can optionally be employed together with the solid catalyst component.

Examples of the organoaluminum compounds, which can be used as the organoaluminum compound (D) and also for preparing the aforesaid aluminoxane, include:
trialkylaluminums, such as trimethylaluminum, triethylaluminum, tripropylaluminum, triisopropylaluminum, tri-n-butylaluminum, triisobutylaluminum, tri-sec-butylaluminum, tri-tert-butylaluminum, tripentylaluminum, trihexylaluminum, trioctylaluminum and tridecylaluminum;
tricycloalkylaluminums, such as tricyclohexylaluminum and tricyclooctylaluminum;
dialkylaluminum halides, such as dimethylaluminum chloride, diethylaluminum chloride, diethylaluminum bromide and diisobutylaluminum chloride;
dialkylaluminum hydrides, such as diethylaluminum hydride and diisobutylaluminum hydride;
dialkylaluminum alkoxides, such as dimethylaluminum methoxide and diethylaluminum ethoxide; and
dialkylaluminum aryloxides, such as diethylaluminum phenoxide.

Of these, preferred are trialkylaluminums and tricycloalkylaluminums, and more preferred are trialkylaluminums, particularly triethylaluminum and triisobutylaluminum.

Also employable as the organoaluminum compound is isoprenylaluminum represented by the following formula:

(i-C₄H₉)ₓAl_{y}(C₅H₁₀)_{z}

wherein x, y, z are each a positive number, and z ≥ 2x.

The organoaluminum compounds mentioned above may be used in combination of two or more kinds.

The organoaluminum compound (D), which is optionally used, may contain a small amount of a metal component other than aluminum.

In the prepolymerized catalyst prepared as above, the prepolymeized olefin polymer is desirably present in an amount of 0.5 to 300 g, preferably 1 to 200 g, more preferably 2 to 100 g, per 1 g of the solid catalyst component.

The dry prepolymerized catalyst for olefin polymerization according to the invention can be obtained by drying the above-mentioned prepolymerized catalyst. From the resulting suspension of the prepolymerized catalyst, the hydrocarbon used as a dispersion medium is generally removed by any conventional means such as filtration prior to drying.

Drying of the prepolymerized catalyst can be carried out by keeping it at a temperature of not higher than 50 °C, preferably 20 to 40 °C, in a stream of an inert gas. The dry prepolymerized catalyst thus obtained has a content of volatile matter of not more than 2.0 % by weight, preferably not more than 1.0 % by weight. The volatile matter content of the dry prepolymerized catalyst is preferably as small as possible, and there is no specific lower limit on the volatile matter content, but the lower limit is practically 0.001 % by weight. The drying time may vary depending on the drying temperature and is generally in the range of 3 to 8 hours.

If the volatile matter content of the dry prepolymerized catalyst exceeds 2.0 % weight, the catalyst may have reduced fluidity and thus may be unable to be stably fed to the polymerization reactor.

The dry prepolymerized catalyst has an angle of repose of, preferably not more than 50°, more preferably 5 to 47°, particularly preferably 10 to 45°. The dry prepolymerized catalyst having an angle of repose exceeding 50° may be unable to be stably fed to the polymerization reactor owing to its reduced fluidity.

The volatile matter content of the dry prepolymerized catalyst can be determined by, for example, a weight loss method or gas chromatography.

In the weight loss method, the dry prepolymerized catalyst is heated at 110 °C for 1 hour in an inert gas atmosphere to measure loss in weight, and the volatile matter content is expressed by percentage of the measured loss in weight to the weight of the dry prepolymerized catalyst before heating.

In the gas chromatography, the volatile matter such as hydrocarbons are extracted from the dry prepolymerized catalyst, then a calibration curve is formed in accordance with the internal standard method, and the volatile matter content in % by weight is calculated from the GC area.

In the determination of the volatile matter content of the dry prepolymerized catalyst, the weight loss method is suitable when the volatile matter content is estimated to be more than about 1 % by weight, while the gas chromatography is suitable when the volatile matter content is estimated to be not more than about 1 % by weight.

The inert gas used for drying the prepolymerized catalyst is, for example, nitrogen gas, argon gas or neon gas. It is desirable that the inert gas has an oxygen concentration of not more than 20 ppm, preferably not more than 10 ppm, more preferably not more than 5 ppm, and a water content of not more than 20 ppm, preferably not more than 10 ppm, more preferably not more than 5 ppm. When the oxygen concentration and the water content in the inert gas exceed the above-mentioned values; the resulting dry prepolymerized catalyst may have markedly reduced olefin polymerization activity.

The inert gas having an oxygen concentration of not more than 20 ppm and a water content of not more than 20 ppm can be obtained by first bringing a commercially available inert gas into contact with a catalyst containing 20 to 40 % by weight of copper and then with a molecular sieve.

The copper containing catalyst used for treating the inert gas is, for example, a hydrogenation or deoxidation catalyst containing 20 to 40 % by weight of copper. More specifically, there can be mentioned a copper-chromium catalyst (e.g., Cu: 35 % by weight, Cr: 31 % by weight, Ba: 2 % by weight, Mn: 2.5 % by weight), a catalyst containing copper supported on silica (e.g., SiO₂: 50 to 65 % by weight, Cu: 16 to 30 % by weight) or the like.

Such catalysts are on the market under the trade names of R3-11 (available from BASF AG.), and G-99B, G-108A and G108B (available from Nissan-Girdle Co.).

It is desired that the inert gas is brought into contact with the catalyst containing 20 to 40 % by weight of copper under the conditions of a temperature of 0 to 100 °C, preferably 0 to 50 °C, a pressure of 1 to 30 kg/cm²-G, preferably 1 to 10 kg/cm²-G, and GHSV of 100 to 2,000 hr⁻¹, preferably 200 to 2,000 hr⁻¹, more preferably 200 to 400 hr⁻¹.

The term "GHSV" is used to mean "gas hourly space velocity". It is defined as the 'volume rate of flow' (m³/hr) of the gas divided by the 'reactor volume' (m³) and it thus has the dimension (hr⁻¹), wherein by the 'volume rate of flow' one means the volume rate as measured at the temperature and pressure of the reactor and by the 'reactor volume' one means the void volume.

The molecular sieves used for treating the inert gas preferably have a bulk density of 0.6 to 0.9 g/cm³, and are on the market under the trade names of Zeolum A-3 and Zeolum A-4 (available from Tosoh K.K.), and Molecular Sieve 3A and Molecular Sieve 4A (available from Nihon Unika K.K.).

In the contact of the inert gas with the molecular sieves, it is desired that the temperature is in the range of 0 to 100 °C, preferably 0 to 50 °C, the pressure is in the range of 1 to 30 kg/cm²-G, preferably 1 to 10 kg/cm²-G, and GHSV is in the range of 100 to 2,000 hr⁻¹, preferably 200 to 2,000 hr⁻¹, more preferably 200 to 400 hr⁻¹.

As described above, the inert gas used for drying the prepolymerized catalyst preferably has an oxygen concentration of not more than 20 ppm and a water content of not more than 20 ppm, and can be obtained by first treating a crude inert gas with a catalyst containing 20 to 40 % by weight of copper under the conditions of a temperature of 0 to 100 °C, a pressure of 1 to 30 kg/cm²-G and GHSV of 100 to 2,000 hr⁻¹ and then with a molecular sieve under the conditions of a temperature of 0 to 100 °C, a pressure of 1 to 30 kg/cm²-G and GHSV of 100 to 2,000 hr⁻¹.

The dry prepolymerized catalyst for olefin polymerization according to the invention has excellent fluidity, and thus can be stably fed to the polymerization reactor. In addition, the dry prepolymerized catalyst is able to (co)polymerize an olefin with high polymerization activity.

The present invention further provides a process for homo- or copolymerizing an olefin in gas phase in the presence of an olefin polymerization catalyst by continuously feeding the olefin and the catalyst to a polymerization reactor (fluidized bed reactor) to produce an olefin (co)polymer, wherein a dry prepolymerized catalyst for olefin polymerization according to the invention is fed to the reactor in the form of a solid powder. In this polymerization, the organoaluminum compound (D) described above can be used together with the dry prepolymerized catalyst for olefin polymerization. It is desired that the organoaluminum compound (D) is used in an amount of usually 1 to 1,000 mol, preferably 2 to 300 mol, based on 1 mol of the transition metal atom in the transition metal compound (B) contained in the dry catalyst.

The polymerization reaction can be carried out in any of batchwise, semi-continuous and continuous processes, and also in two or more stages under different reaction conditions. In the present invention, a continuous fluidized bed gas phase polymerization process is preferably employed.

In the gas phase polymerization process, the polymerization temperature is in the range of usually 50 to 120 °C, preferably 60 to 100 °C, the polymerization pressure is in the range of usually atmospheric pressure to 100 kg/cm², preferably atmospheric pressure to 50 kg/cm², and the gas linear speed is in the range of usually 0.4 to 1.5 m/sec, preferably 0.6 to 1.2 m/sec.

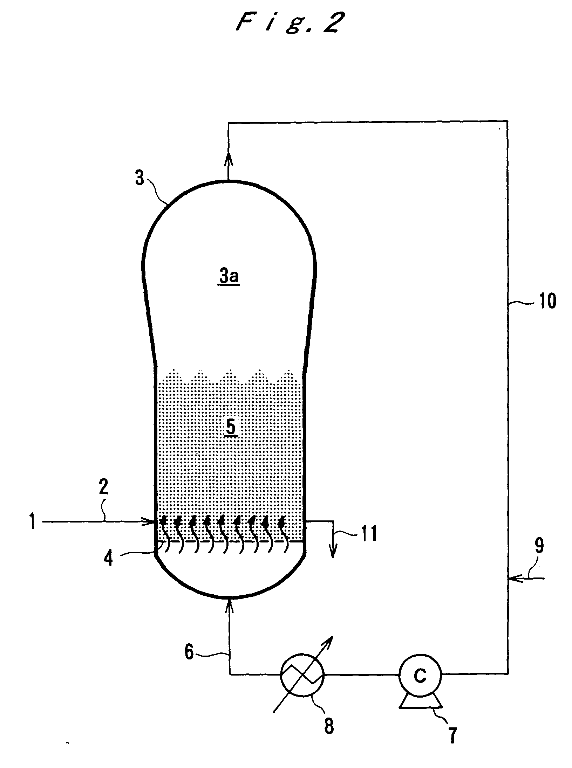

The gas phase olefin polymerization process according to the invention is now described in detail with reference to Fig. 2.

The dry prepolymerized catalyst for olefin polymerization (referred to as solid catalyst) (1) is fed in the form of a solid powder to a fluidized bed reactor (3) through, for example, a line 2.

The solid catalyst (1) is desirably fed at a feed rate of usually 0.00001 to 1.0 mmol/hr, preferably 0.0001 to 0.1 mmol/hr, in terms of the transition metal atom in the transition metal compound (B), per 1 liter of the polymerization volume.

A gaseous olefin is also continuously blown into the fluidized bed reactor (3), for example, at the bottom portion of the reactor (3), through a line (6) by means of a blower (7) into which the olefin is supplied from an olefin supply line (9). The olefin blown into the bottom portion of the reactor (3) passes through a gas distribution plate (4) such as a perforated plate for distributing the solid catalyst (1) to form a fluidized bed (reaction system) (5), where (co)polymerization of the olefin takes place to produce an olefin (co)polymer in the form of particles. Thus, the olefin fed to the reactor (3) also serves as a fluidizing gas to keep the solid catalyst particles in the reaction system fluidized state. It is also possible to use a gas mixture of an olefin and an inert gas such as nitrogen as a fluidizing gas. The resulting polymer particles are continuously withdrawn from the fluidized bed reactor (3) through a polymer recovery line (11).

On the other hand, the gaseous unreacted olefin passes through the fluidized bed (5) and is reduced in its velocity in a velocity reduction zone (3a) provided in the upper portion of the fluidized bed reactor (3), followed by leaving the fluidized bed reactor (3). The unreacted olefin leaving the reactor (3) may be recycled to the fluidized bed reactor (3) through a recycling line (10) together with a fresh olefin from the olefin supply line (9). Prior to recycling the unreacted olefin, it is preferred that the polymerization heat is removed by means of an heat exchanger (8), which is shown in Fig. 2 downstream the blower (7), but may be arranged upstream the blower (7). However, it is also possible that the polymerization heat is utilized for heating the fresh olefin prior to feeding it to the reactor (3).

In the manner as described above, the process of the present invention can be operated continuously.

The molecular weight of the resulting olefin polymer can be controlled by using a molecular weight modifier such as hydrogen or varying the polymerization temperature. The hydrogen can be fed to the fluidized bed reactor (3) at any optional position, for example, at the bottom portion of the reactor (3) through the recycling line (10).

Examples of the olefins used in the invention include α-olefins of 2 to 18 carbon atoms, such as ethylene, propylene, 1-butene, 1-pentene, 1-hexene, 4-methyl-1-pentene, 3-methyl-1-pentene, 1-heptene, 1-octene, 1-nonene, 1-decene, 1-undecene, 1-dodecene, 1-tetradecene, 1-hexadecene and 1-octadecene.

Also employable are monocyclo- and polycycloolefins such as cyclopentene, cycloheptene, norbornene, 5-methyl-2-norbornene, tetracyclododecene, 2-methyl-1,4,5,8-dimethano-1,2,3,4,4a,5,8,8a-octahydronaphthalene, and further aromatic and alicyclic vinyl compounds such as styrene, vinyltoluene and vinylcyclohexane.

Further, polyenes such as butadiene, isoprene, 1,4-hexadiene, dicyclopentadiene and 5-ethylidene-2-norbornene can also be copolymerized with the olefins.

In the present invention, it is preferred to copolymerize ethylene and an α-olefin of 3 to 18 carbon atoms to prepare linear low-density polyethylenes (LLDPE). In the invention, among the olefin polymers, low-crystalline ethylene-α-olefin copolymers containing constituent units from ethylene in an amount of 75 to 98 % by weight, preferably 80 to 97 % by weight, and constituent units from the α-olefin in an amount of 3 to 25 % by weight, preferably 3 to 20 % by weight, i.e., so-called linear low-density polyethylenes (LLDPE), is particularly preferably prepared.

### EFFECT OF THE INVENTION

The dry prepolymerized catalyst for olefin polymerization according to the invention comprises a solid catalyst component and a prepolymerized polymer of an olefin, said solid catalyst component comprising (A) a particle carrier, (B) a compound of a transition metal of Group IVB of the periodic table and (C) an organoaluminum oxy-compound, both (B) and (C) being supported on the particle carrier (A), wherein said dry prepolymerized catalyst has a volatile matter content of not more than 2 % by weight. This dry prepolymerized catalyst not only has excellent fluidity and can be stably fed to the polymerization reactor, but also has excellent olefin polymerization activity.

According to the invention, a dry prepolymerized catalyst for olefin polymerization having excellent fluidity can be prepared without reducing the olefin polymerization activity.

Such a dry prepolymerized catalyst can be used for gas phase olefin polymerization by feeding the catalyst in the form of a solid powder to the polymerization reactor, so that an olefin can be stably polymerized for a long period of time with high polymerization activity. Further, because the catalyst can be fed in the form of a solid powder to the reactor, the polymerization temperature can be widened as compared to the conventional processes where the catalyst is used in the form of a suspension in a hydrocarbon.

### EXAMPLES

The present invention will be further described with reference to the following examples, but it should be construed that the invention is in no way limited to those examples.

The volatile matter content and the angle of repose were measured in the following manner.

### Volatile matter content

### Pretreatment of sample

1. A sample of 0.5 g was weighed, and extracted with 30 ml of acetone while cooling it with dry ice acetone. Then, a solution of methyl benzoate in acetone (0.05 g/5 ml) was added as an internal standard.
2. To the mixture, 1 ml of 13 % ammonia water was added and then acetone was further added to make the total amount 50 ml.
3. The mixture was filtered through a filter of 0.2 µm.

### Analysis

The pretreated sample of 1 microliter was subjected to gas chromatography to detect hydrocarbons of 6 to 10 carbon atoms. The amount of the hydrocarbons thus detected, was regarded as a volatile matter content, was calculated from the GC area using a calibration curve formed in accordance with the internal standard method, and expressed as % by weight.

### Measuring conditions

Column: fused silica capillary column DB-WAX (manufactured by J & W Co., 122-7062)
Column size: 0.25 mm (diameter) × 60 m (length), df = 0.25 µm
Column temperature: 50 °C → 230 °C (retention time: 2 minutes, heating rate: 15 °C/min)
Detector: FID
Carrier gas: helium
Split ratio: 1 : 65
Split flow rate: 73 ml/min

### Angle of repose

The angle of repose was measured in accordance with a discharge method using a multitester MT-1000™ (manufactured by Seishin Kigyo K.K.). The dry prepolymerized catalyst was let fall on a measuring table through a funnel, a conical heap of the catalyst formed on the table was measured on its slope angle (angle of repose) at three or more positions, and an arithmetic mean of measured values was taken as an angle of repose. The smaller the angle of repose of the dry prepolymerized catalyst, the better its fluidity.

### Example 1

### Preparation of solid catalyst component

In 154 liters of toluene, 10 kg of silica (SiO₂) having been dried at 250 °C for 10 hours was suspended, and the suspension was cooled to 0 °C. To the suspension, 50.5 liters of a solution of methylaluminoxane (Al: 1.52 mol/l) in toluene was dropwise added over a period of 1 hour while keeping the temperature of the system at 0 to 5 °C. Subsequently, the reaction was carried out at 0 °C for 30 minutes, and the temperature was elevated up to 95 °C over a period of 1.5 hours. The reaction was continued at the same temperature for 4 hours, and then the temperature was lowered to 60 °C, followed by removing the supernatant by decantation. The remaining solid was washed twice with toluene and resuspended in 100 liters of toluene to make the total amount 160 liters.

To the resulting suspension, 22.0 liters of a solution of bis(1,3-n-butylmethylcyclopentadienyl)zirconium dichloride in toluene (Zr: 25.7 mmol/l) was dropwise added at 80 °C over a period of 30 minutes, and the reaction was carried out at 80°C for 2 hours. Then, the supernatant was removed and the remainder was washed twice with hexane, to obtain a solid catalyst component containing 3.2 mg of zirconium per 1 g of silica.

### Preparation of prepolymerized catalyst

To a 350-liter reactor thoroughly purged with nitrogen, 7.0 kg of the solid catalyst component obtained above was introduced and hexane was added to make the total volume 285 liters. After the system was cooled to 10 °C, ethylene was blown into the resulting suspension of the solid catalyst component in hexane for 5 minutes at a flow rate of 8 Nm³/hr while keeping the temperature of the system at 10 to 15 °C. Thereafter, feeding of ethylene was terminated, and 2.4 mol of isobutylaluminum and 1.2 kg of 1-hexene were added. After the autoclave was closed, ethylene was again fed to the closed system at a feed rate of 8 Nm³/hr. After 15 minutes, the feed rate of ethylene was decreased to 2 Nm³/hr and the pressure of the system was set to 0.8 kg/cm²-G, while the temperature of the system rose up to 35 °C. Then, ethylene was fed at a feed rate of 4 Nm³/hr for 3.5 hours with controlling the temperature of the system within 32 to 35 °C and maintaining the pressure of the system at 0.7 to 0.8 kg/cm²-G. After the system was purged with nitrogen, the supernatant was removed and the remainder was washed twice with hexane. Thus, a prepolymerized catalyst containing 3 g of a prepolymerized polymer per 1 g of the solid catalyst component was obtained. The prepolymerized polymer had an intrinsic viscosity (η) of 2.1 dl/g, and a 1-hexene content of 4.8 % by weight.

The supernatant removed after the prepolymerization was colorless and transparent, and the resulting prepolymerized catalyst was of good shape and had a bulk density of 0.4 g/cm³.

### Drying of prepolymerized catalyst

In a 130-liter filter dryer equipped with a jacket, a suspension of 20 kg of the prepolymerized catalyst obtained aboven in hexane was filtered to remove the hexane. Then, the jacket was heated to 40 °C to dry the prepolymerized catalyst for 3 hours while passing a nitrogen gas (oxygen concentration: 10 ppm, water content: 5 ppm) through the system at a rate of 6 Nm³/hr. During the drying, the temperature of the system rose up to 35 °C from 20 °C. Thus, a dry prepolymerized catalyst having a volatile matter content of 0.1 % by weight, a bulk density of 0.40 g/cm³ and an angle of repose of 38.1° was obtained.

### Gas phase polymerization

In a continuous fluidized bed gas phase polymerization reactor, copolymerization of ethylene and 1-hexane was carried out under the conditions of a total pressure of 20 kg/cm²-G, a polymerization temperature of 85 °C and a gas linear speed of 0.7 m/sec. The dry prepolymerized catalyst obtained above was continuously fed at a feed rate of 60 g/hr, and also ethylene, 1-hexane, hydrogen and nitrogen were continuously fed to keep a constant gas composition during the polymerization (1-hexene/ethylene = 0.025, hydrogen/ethylene = 1.5 × 10⁻⁴, ethylene concentration = 71 %).

An ethylene-1-hexene copolymer was obtained in a yeild of 80 kg/hr. The ethylene-1-hexene copolymer had a density of 0.91 g/cm³, a melt flow rate (MFR) of 0.61 g/10 min and a bulk density of 0.44 g/cm³. The polymer particles had a mean diameter of 1,050 µm, and contained the fine powder polymer having a particle diameter of not more than 100 µm in a proportion of not more than 0.1 % by weight.

After 10-day continuous polymerization, the inside wall and the dispersion plate of the polymerization reactor were checked, and adhesion of the polymer thereto was not observed.

### Example 2

A dry prepolymerized catalyst having a volatile matter content of 0.1 % by weight was prepared in the same manner as in Example 1 except that a nitrogen gas having an oxygen concentration of 25 ppm was used for drying the prepolymerized catalyst. Then, copolymerization of ethylene and 1-hexene was carried out in the same manner as in Example 1 except that the dry prepolymerized catalyst obtained above was used. An ethylene-1-hexene copolymer was obtained in a yield of 56 kg/hr.

### Example 3

A dry prepolymerized catalyst was prepared in the same manner as in Example 1 except that a nitrogen gas having an oxygen concentration of 5 ppm and a water content of 3 ppm was used for drying the prepolymerized catalyst. The nitrogen gas used was obtained from a nitrogen gas having an oxygen concentration of 25 ppm by passing through a reaction tube charged with 25 liters of R3-11 (available from BASF AG.) under the conditions of a temperature of 40 °C, a pressure of 1 atm and GHSV of 300 hr⁻¹ and then through an adsorption tube charged with 25 liters of a molecular sieve (Zeolum A-3, available from Tosoh K.K.) under the conditions of a temperature of 40 °C, a pressure of 1 atm and GHSV of 300 hr⁻¹. Then, copolymerization of ethylene and 1-hexene was carried out in the same manner as in Example 1 except that the dry polymerized catalyst obtained above was used. An ethylene-1-hexene copolymer was obtained in a yield of 82 kg/hr.

### Example 4

### Drying of prepolymerized catalyst

In a 130-liter filter dryer equipped with a jacket, a suspension of 20 kg of the prepolymerized catalyst obtained in Example 1 in hexane was filtered to remove the hexane. Then, the jacket was heated to 40 °C, and the prepolymerized catalyst was dried for 3 hours while passing a nitrogen gas (oxygen concentration: 10 ppm, water content: 7 ppm) through the system at a rate of 6 Nm³/hr. During the drying, the temperature of the system rose up to 35 °C from 20 °C. Thus, a dry prepolymerized catalyst having a volatile matter content of 0.1 % by weight, a bulk density of 0.40 g/cm³ and an angle of repose of 39.3° was obtained.

### Gas phase polymerization

Ethylene and 1-hexene were copolymerized in the same manner as in Example 1 except that the dry prepolymerized catalyst obtained above was used.

An ethylene-1-hexene copolymer was obtained in a yield of 78 kg/hr. The ethylene-1-hexene copolymer had a density of 0.91 g/cm³, a melt flow rate (MFR) of 0.65 g/10 min and a bulk density of 0.43 g/cm³. The polymer particles had a mean diameter of 1,000 µm, and contained the fine powder polymer having a particle diameter of not more than 100 µm in a proportion of not more than 0.1 % by weight.

After 10-day continuous polymerization, the inside wall and the dispersion plate of the polymerization apparatus were checked, and adhesion of the polymer thereto was not observed.

### Comparative Example 1

### Drying of prepolymerized catalyst

In a 130-liter filter dryer equipped with a jacket, a suspension of 20 kg of the prepolymerized catalyst obtained in Example 1 in hexane was filtered to remove the hexane. Then, the jacket was heated to 40 °C, and the prepolymerized catalyst was dried for 1 hour by passing a nitrogen gas (oxygen concentration: 10 ppm, water content: 5 ppm) through the system at a rate of 6 Nm³/hr. During the drying, the temperature of the system rose up to 22 °C from 20 °C. Thus, a dry prepolymerized catalyst having a volatile content of 3 % by weight, a bulk density of 0.33 g/cm³ and an angle of repose of 60.5° was obtained.

### Gas phase polymerization

Ethylene and 1-hexene were tried to be polymerized in the same manner as in Example 1 except that the dry prepolymerized catalyst obtained above was used. However, this dry prepolymerized catalyst cannot be continuously fed to the polymerization reactor because of its bad fluidity.

### Example 5

### Preparation of prepolymerized catalyst

In 154 liters of toluene, 10 kg of silica (SiO₂) having been dried at 250 °C for 10 hours was suspended. To the suspension cooled to 0°C, 44.1 liters of a solution of methylaluminoxane in toluene (Al: 1.52 mol/l) was dropwise added over a period of 1 hour while keeping the temperature of the system at 0 to 5 °C. Subsequently, the reaction was carried out at 0 °C for 30 minutes, and the temperature was elevated up to 95 °C over a period of 1.5 hours. The reaction was continued at the same temperature for 4 hours, and then the temperature was lowered to 60 °C, followed by removing the supernatant by decantation. The remaining solid was washed twice with toluene and resuspended in 100 liters of toluene to make the total amount 160 liters.

To a different reactor, 62 liters of the resulting suspension and 75 liters of toluene were introduced. After adding 50 g of rac-dimethylsilylenebis{1-(2-methyl-4,5-benzoindenyl)}zirconium dichloride, the mixture was stirred for 20 minutes, followed by further adding 270 liters of hexane and 4.35 mol of triisobutylaluminum. Then, prepolymerization was carried out at 20 °C for 2 hours with feeding propylene at a feed rate of 8 kg/hr. After 2 hours, feeding of propylene was terminated, and the reaction was continued for another 30 minutes. After the system was purged with nitrogen, the supernatant was removed and the remainder was washed three times with hexane. Thus, a prepolymerized catalyst containing about 3 g of a prepolymerized polymer per 1 g of the solid catalyst component was obtained.

### Drying of prepolymerized catalyst

The prepolymerized catalyst obtained above was dried in the same manner as in Example 1. Thus, a dry prepolymerized catalyst having a volatile matter content of 0.2 % by weight, a bulk density of 0.40 g/cm³ and an angle of repose of 36.0° was obtained.

### Comparative Example 2

### Drying of prepolymerized catalyst

The prepolymerized catalyst obtained in Example 5 was dried in the same manner as in Comparative Example 1. Thus, a dry prepolymerized catalyst having a volatile matter content of 2.8 % by weight, a bulk density of 0.34 g/cm³ and an angle of repose of 58.9° was obtained.

## Claims

1. A dry prepolymerized catalyst suitable for olefin polymerization, which catalyst comprises a solid catalyst component and a prepolymerized olefin polymer, said solid catalyst component comprising:
(A) a particle carrier composed of at least one element selected from those of Groups II, III and IV of the periodic table,
(B) a compound of a transition metal of Group IVB of the periodic table supported on the particle carrier (A), and
(C) an organoaluminium oxy-compound supported on the particle carrier (A),
wherein said dry prepolymerized catalyst has a volatile matter content of not more than 2.0% by weight.

2. A catalyst according to claim 1 having a volatile matter content of not more than 1.0% by weight.

3. A process for preparing a catalyst as defined in claim 1 or 2 which comprises drying a prepolymerized catalyst at a temperature of not higher than 50°C in a stream of an inert gas having an oxygen concentration of not more than 20 ppm and a water content of not more than 20 ppm, to reduce the volatile matter content to not more than 2.0% by weight, wherein said prepolymerized catalyst comprises a solid catalyst component and a prepolymerized olefin polymer, said solid catalyst component comprising components (A), (B) and (C) as defined in claim 1.

4. A process according to claim 3 wherein in the inert gas has been obtained by first treating a crude inert gas with a catalyst containing 20 to 40% by weight of copper under the conditions of a temperature of 0 to 100°C, a pressure of 1 to 30 kg/cm²-G and a GHSV of 100 to 2,000 hr⁻¹ and then treating the inert gas with a molecular sieve under the conditions of a temperature of 0 to 100°C, a pressure of 1 to 30 kg/cm²-G and a GHSV of 100 to 2,000 hr⁻¹.

5. A gas phase olefin polymerization process which comprises polymerizing an olefin in the gas phase in a polymerization reactor in the presence of a prepolymerized catalyst which is in the form of a solid powder and is as defined in claim 1 or 2.

## Patentansprüche

1. Ein trockener vorpolymerisierter Katalysator, der zur Olefinpolymerisation geeignet ist, wobei der Katalysator eine feste Katalysatorkomponente und ein vorpolymerisiertes Olefinpolymer umfasst, wobei die feste Katalysatorkomponente umfasst:
(A) einen Teilchenträger, der aus wenigstens einem Element, ausgewählt aus jenen der Gruppen II, III und IV des Periodensystems der Elemente, zusammengesetzt ist,
(B) eine Übergangsmetallverbindung der Gruppe IVB des Periodensystems der Elemente, die auf dem Teilchenträger (A) geträgert ist, und
(C) eine Organoaluminiumoxy-Verbindung, die auf dem Teilchenträger (A) geträgert ist,
worin der trockene vorpolymerisierte Katalysator einen Gehalt an flüchtigen Bestandteilen von nicht mehr als 2,0 Gew.-% aufweist.

2. Ein Katalysator gemäß Anspruch 1, der einen Gehalt an flüchtigen Bestandteilen von nicht mehr als 1,0 Gew.-% aufweist.

3. Ein Verfahren zur Herstellung eines Katalysators gemäß einem der Ansprüche 1 oder 2, umfassend das Trocknen eines vorpolymerisierten Katalysators bei einer Temperatur von nicht mehr als 50°C in einem Inertgas-Strom, welches eine Sauerstoffkonzentration von nicht mehr als 20 ppm und einen Wassergehalt von nicht mehr als 20 ppm aufweist, um den Gehalt an flüchtigen Bestandteilen auf nicht mehr als 2,0 Gew.-% zu reduzieren, worin der vorpolymerisierte Katalysator eine feste Katalysatorkomponente und ein vorpolymerisiertes Olefinpolymer umfasst, wobei die feste Katalysatorkomponente die wie in Anspruch 1 angegebenen Komponenten (A), (B) und (C) umfasst.

4. Ein Verfahren gemäß Anspruch 3, worin das Inertgas erhalten worden ist, indem zuerst ein rohes Inertgas mit einem Katalysator, der 20 bis 40 Gew.-% Kupfer enthält, unter den Bedingungen einer Temperator von 0 bis 100°C, einem Druck von 1 bis 30 kg/cm²-G und einer GHSV von 100 bis 2000 hr⁻¹ behandelt wird und anschließend das Inertgas mit einem Molekularsieb unter den Bedingungen einer Temperatur von 0 bis 100°C, einem Druck von 1 bis 30 kg/cm²-G und einer GHSV von 100 bis 2000 hr⁻¹ behandelt wird.

5. Ein Gasphasen-Olefinpolymerisationsverfahren, umfassend das Polymerisieren eines Olefins in der Gasphase in einem Polymerisationsreaktor in Gegenwart von einem vorpolymerisierten Katalysator, der in Form eines festen Pulvers vorliegt und wie in Anspruch 1 oder 2 definiert ist.

## Revendications

1. Catalyseur sec à prépolymère, approprié pour la polymérisation d'oléfines, lequel catalyseur comprend un composant catalyseur solide et un polymère de prépolymérisation d'oléfine, ledit composant catalyseur solide comportant :
A) un support particulaire, qui est composé d'au moins un élément choisi parmi ceux des groupes II, III et IV du Tableau périodique,
B) un composé d'un métal de transition du groupe IV-B du Tableau périodique, supporté par le support particulaire (A),
C) et un composé organo-oxy-aluminium, supporté par le support particulaire (A),
et lequel catalyseur sec à prépolymère ne contient pas plus de 2,0 % en poids de matières volatiles.

2. Catalyseur conforme à la revendication 1, qui ne contient pas plus de 1,0 % en poids de matières volatiles.

3. Procédé de préparation d'un catalyseur conforme à la revendication 1 ou 2, qui comporte le fait de faire sécher un catalyseur issu d'une prépolymérisation, à une température d'au plus 50 °C, dans un courant de gaz inerte contenant au plus 20 ppm d'oxygène et au plus 20 ppm d'eau, afin de réduire à une valeur d'au plus 2,0 % en poids la teneur du catalyseur en matières volatiles, ledit catalyseur issu d'une prépolymérisation comprenant un composant catalyseur solide et un polymère de prépolymérisation d'oléfine, ledit composant catalyseur solide comportant les composants (A), (B) et (C) indiqués dans la revendication 1.

4. Procédé conforme à la revendication 3, pour lequel on a obtenu le gaz inerte en traitant d'abord un gaz inerte brut avec un catalyseur contenant de 20 à 40 % en poids de cuivre, dans les conditions : température de 0 à 100 °C, pression manométrique de 1 à 30 kg/cm² et VSHG de 100 à 2 000 h⁻¹, et en traitant ensuite le gaz inerte avec des tamis moléculaires, dans les conditions : température de 0 à 100 °C, pression manométrique de 1 à 30 kg/cm² et VSHG de 100 à 2 000 h⁻¹.

5. Procédé de polymérisation d'oléfine en phase gazeuse, qui comporte le fait de faire polymériser une oléfine en phase gazeuse dans un réacteur de polymérisation, en présence d'un catalyseur à prépolymère qui se trouve sous la forme d'un solide pulvérulent et qui est conforme à la revendication 1 ou 2.
